# FASCICULE DE BREVET EUROPEEN

(11) **EP 0 939 138 B1**
(45) Date de publication et mention de la délivrance du brevet: **28.01.2004**
(21) Numéro de dépôt: 99420039.2
(22) Date de dépôt: 12.02.1999
(51) Int. Cl.: C22B 19/30, C22B 7/02, C22B 19/20, C25C 1/16, C22B 3/12

(54) **Procédé et installation de traitement de déchets contenant du zinc par lixiviation basique**
Verfahren und Anlage zur Aufarbeitung zinkhaltiger Abfälle mittels basischer Laugung
Process and apparatus for treating zinc containing waste by alkaline leaching

(30) Priorité: 18.02.1998 FR 9802157
(43) Date de publication de la demande: 01.09.1999
(73) Titulaire: TREZ, 73220-Aiguebelle (FR)
(72) Inventeur: Charpentier, Pierre-Emmanuel, 74250 Viuz en Sallaz (FR); Girardot, Jean-Claude, 74930 Reignier (FR); Rizet, Laurent, 74250 Viuz en Sallaz (FR)
(74) Mandataire: Myon, Gérard Jean-Pierre

(56) Documents cités:
- FR-A- 2 510 141
- FR-A- 2 535 736
- US-A- 4 272 341
- I. NIRDOSH ET AL.: "Bench scale investigations on the electrolytic recovery of zinc powder from galvaniser's ash" HYDROMETALLURGY, vol. 20, no. 2, mai 1988, pages 203-217, XP002051571 Amsterdam, NL
- T. CORSINI: "Treatment of EAF dust by a leachant process" STEEL TIMES, vol. 222, no. 10, octobre 1994, page 400 XP000469085 Redhill, GB

## Description

La présente invention a trait à un procédé de traitement de déchets contenant du zinc, notamment des résidus métalliques.

Les déchets renfermant du zinc, qui sont industriels ou ménagers, peuvent être notamment des poussières d'aciéries électriques qui contiennent en outre des métaux lourds, tels que du plomb, du cadmium ou du chrome sous forme oxydée, ou bien encore des boues d'hydroxydes métalliques provenant de traitements de surfaces ou bien encore des piles domestiques usagées.

De manière habituelle, de tels procédés de traitement sont destinés à extraire les métaux lourds contenus dans ces déchets, puis à transformer ces métaux en une forme stabilisée non nuisible à l'environnement et éventuellement valorisable économiquement.

On connaît, notamment par FR-A-2 510 141, un procédé de ce type dans lequel des poussières d'aciéries électriques sont tout d'abord soumises à une lixiviation au moyen d'un agent tel que la soude. Puis le lixiviat ainsi formé, après avoir subi une séparation visant à en extraire une fraction riche en fer, est soumis à une étape de purification au sein d'un bac de cémentation au zinc. Cette dernière étape conduit à la formation de céments de certains métaux lourds tels que le plomb, céments qui peuvent être extraits au moyen d'une séparation solide/liquide.

Le lixiviat ainsi purifié est ensuite admis dans une unité visant à en extraire le zinc, typiquement une cuve électrolytique. Ceci permet la récupération d'une fine poudre de zinc stabilisée aisément valorisable, notamment par une utilisation comme réactif dans le bac de cémentation.

La solution de soude sortant de la cuve électrolytique est alors recyclée en amont du bac de lixiviation. Cependant, étant donné que cette solution de soude a subi, durant les étapes successives de lixiviation, de cémentation et d'électrolyse, un phénomène d'enrichissement progressif en éléments dissous tels que des sulfates et des chlorures, il est nécessaire de la soumettre à une opération visant à l'en épurer. Dans le procédé de l'art antérieur considéré, il s'agit d'une évaporation visant à précipiter ces éléments dissous. Cependant, une telle évaporation s'avère extrêmement coûteuse, ce qui est préjudiciable à l'intérêt économique du procédé. De plus, dans ce contexte, il ne serait pas judicieux d'abandonner cette phase de recyclage de la solution de soude en amont du bac de lixiviation, dans la mesure où il serait alors nécessaire de faire appel à des quantités de soude fraîche considérables.

Afin de pallier l'ensemble de ces inconvénients, l'invention a pour objet un procédé de traitement de déchets contenant du zinc qui, tout en assurant une régulation efficace de la teneur en éléments dissous au sein de l'agent de lixiviation, soit placé dans un contexte global tel que son intérêt économique en soit amélioré.

A cet effet, l'invention a pour objet un procédé de traitement de déchets contenant du zinc tels que des poussières d'aciéries électriques, tel que défini dans la revendication 1.

On entend par rejets acides notamment des solutions acides usées contenant une acidité résiduelle qu'il est nécessaire de neutraliser, ou bien encore des solutions usées contenant des éléments ayant un comportement acide, c'est-à-dire capables de neutraliser les ions OH⁻, par exemple par précipitation d'hydroxydes métalliques.

Avant que la deuxième fraction de l'agent de lixiviation ne soit soumise au traitement acide, cet agent renferme des ions zinc ainsi que des éléments dissous parasites, notamment des chlorures et des sulfates. Sous l'effet de la chute de pH provenant de l'adjonction des rejets acides, il se produit une précipitation quasi-totale du zinc sous la forme d'une boue riche en hydroxyde de zinc. Cette boue peut être facilement séparée d'une grande partie des éléments qui restent dissous après l'étape acide, tels que les chlorures et les sulfates, par exemple au moyen d'une séparation solide/liquide. On recycle donc en tête de l'opération de lixiviation une boue pauvre en éléments dissous parasites et riche en zinc, zinc qui pourra être valorisé par extraction au sein de l'étape d'électrolyse du procédé.

Le procédé conforme à l'invention permet de réaliser les objectifs précédemment mentionnés. En effet, la première fraction de l'agent de lixiviation usé peut être recyclée sans traitement vers l'étape de lixiviation. En ce qui concerne la deuxième fraction d'agent usé, on pourrait penser que sa neutralisation par des rejets acides obère l'intérêt économique du procédé de l'invention, puisqu'elle ne peut être recyclée en l'état et que l'on doit prévoir un apport d'agent de lixiviation frais.

Or, l'invention tire parti du fait que de tels rejets acides doivent nécessairement être traités au moyen d'une solution basique et qu'il est préférable, d'un point de vue économique, de réaliser un co-traitement, à savoir de traiter ce déchet acide au moyen d'un autre déchet, de nature basique, plutôt qu'un traitement de ce déchet acide par une solution basique non souillée.

De plus, un tel co-traitement présente, en l'espèce, un avantage économique supplémentaire dans la mesure où il permet de recycler le zinc dissous dans l'agent de lixiviation usé, qui pourra être extrait et valorisé lors de l'étape d'électrolyse.

On remarque que l'invention permet d'éliminer de la solution l'ensemble des éléments solubles indésirables tels que les sels, mais également les autres impuretés qui pourraient éventuellement se concentrer dans la solution, telles qu'entre autres la silice, ainsi que d'éventuels éléments organiques.

Selon une première caractéristique de l'invention, on règle les débits des première et deuxième fractions d'agent de lixiviation usé, de sorte que l'agent de lixiviation admis en tête de l'étape de lixiviation présente une teneur en éléments dissous parasites inférieure à une valeur prédéterminée.

La composition de l'agent de lixiviation admis en tête de l'opération de lixiviation est fonction du débit d'agent de lixiviation frais et du débit d'agent de lixiviation usé recyclé. L'homme du métier est donc à même de régler ces différents débits afin de limiter la teneur globale de l'agent de lixiviation en éléments gênants tels que les ions sulfates et les ions chlorures. A titre d'exemple, l'expérimentation a montré que, dans le cas des ions sulfates et chlorures, on a avantage à limiter ces teneurs à des valeurs inférieures respectivement à 15 g/l et 8 g/l au niveau de l'étape d'électrolyse.

Ce mode de réalisation assure une grande flexibilité et permet d'ajuster la teneur en sels de façon précise, en fonction des différents paramètres de l'installation de traitement, de manière à s'affranchir de toute surqualité qui serait préjudiciable sur le plan économique.

Selon une autre caractéristique avantageuse de l'invention, les rejets acides contiennent du zinc. Ce mode de réalisation est particulièrement intéressant sur le plan économique, puisque la neutralisation de l'agent de lixiviation usé au moyen de rejets acides renfermant du zinc permet la récupération du zinc contenu non seulement dans l'agent de lixiviation, mais également dans ces rejets acides.

Ces rejets acides peuvent provenir notamment d'opérations de galvanisation. Ce mode de réalisation est particulièrement avantageux, dans la mesure où les entreprises de galvanisation à chaud, qui utilisent des quantités importantes d'acide chlorhydrique pour le décapage principalement des supports de pièces à galvaniser et des pièces rebutées, émettent des rejets acides contenant une quantité assez importante de zinc.

Outre cette possibilité d'extraction du zinc contenu dans les deux déchets mis en contact, le procédé conforme à l'invention présente également un intérêt économique notable pour les galvanisateurs. En effet, ceux-ci paient, de manière habituelle, une somme importante afin d'éliminer leurs rejets acides, qui pourra être réduite de manière notable du fait de la possibilité de récupérer le zinc présent dans ces rejets.

Selon une autre caractéristique de l'invention, on dilue à l'eau ladite deuxième fraction dudit agent de lixiviation usé et/ou lesdits rejets acides avant l'étape de neutralisation ou au cours de cette étape.

Cette disposition se révèle avantageuse, en particulier dans le cas de l'utilisation de rejets acides riches en zinc, pour éviter une trop forte concentration d'hydroxydes dans les boues qui rendrait la suspension difficilement pompable.

Selon une autre caractéristique de l'invention, on lave, par exemple avec de l'eau, la boue après la phase de séparation des éléments dissous parasites, avant de la recycler en tête de l'étape de lixiviation. Ceci permet de diminuer encore la concentration en éléments dissous parasites emprisonnés dans le liquide intersticiel du gâteau, en particulier dans le cas de résidus acides à traiter riches en zinc ou autres métaux entraînant un fort recyclage de gâteau d'hydroxydes.

L'invention a également pour objet une installation de traitement de déchets contenant du zinc, tels que des poussières d'aciéries électriques, comprenant une arrivée des déchets à traiter, un bac de lixiviation qui est destiné à recevoir les déchets et qui est mis en communication avec une alimentation d'un agent de lixiviation basique, un bac de cémentation pour purifier le lixiviat, une cuve électrolytique pour l'extraction du zinc à partir du lixiviat purifié, et des moyens de recyclage direct vers l'amont du bac de lixiviation, de l'agent de lixiviation usé obtenu après la dite extraction du zinc et contenant des éléments dissous parasites,
caractérisée en ce que les moyens de recyclage comprennent une première ligne directement reliée à l'amont du bac de lixiviation, au sein de laquelle est admise une première fraction de l'agent de lixiviation usé, cette première ligne étant disposée en parallèle d'une deuxième ligne de traitement au sein de laquelle est admise une seconde fraction de l'agent de lixiviation usé, cette deuxième ligne étant mise en communication avec une arrivée de rejets acides, ce qui permet la formation d'une boue d'hydroxydes métalliques riche en zinc, et en ce qu'il est prévu des moyens de séparation de cette boue et de ces éléments dissous parasites, ainsi que des moyens de circulation vers l'amont du bac de lixiviation de cette boue séparée. En outre, l'installation comporte des moyens aptes à régler le débit des première et deuxième fractions d'agent de lixiviation circulant dans les première et deuxième lignes.

Selon d'autres caractéristiques de l'invention :
- les moyens de séparation de la boue et des sels comprennent par exemple un décanteur, un filtre ou une centrifugeuse ;
- l'arrivée de rejets acides est alimentée en rejets acides contenant du zinc et
- l'installation comprend des moyens de lavage de la boue, en aval des moyens de séparation ou associés à ces moyens de séparation.

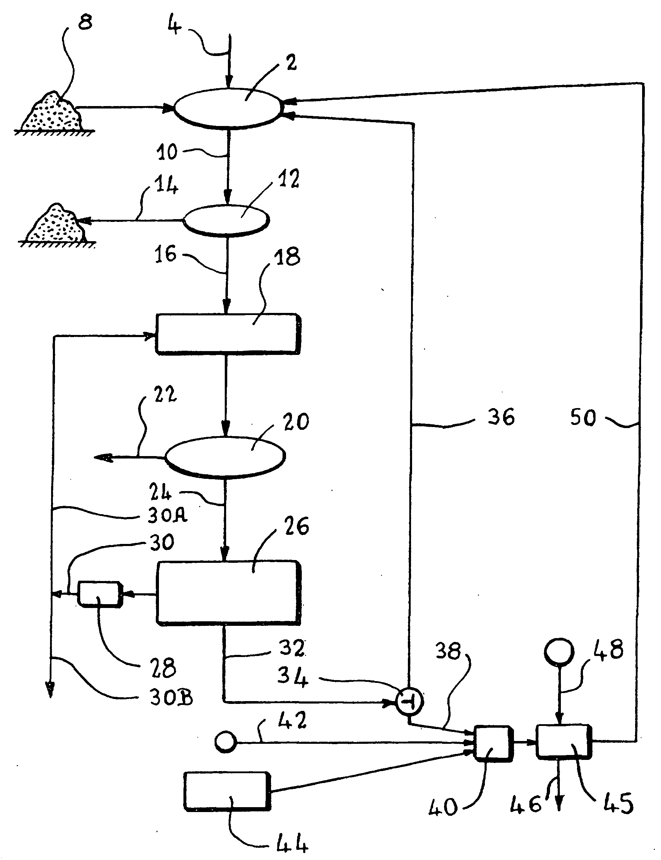

Un exemple de mise en oeuvre de l'invention va maintenant être décrit en regard de la figure unique qui représente schématiquement une installation pour le traitement de résidus métalliques.

L'installation représentée sur cette figure comprend un lixiviateur 2 alimenté en soude fraîche par une conduite 4 et dans lequel sont introduits des résidus métalliques 8 contenant du zinc, par exemple des poussières d'aciéries électriques. Le lixiviateur est également alimenté par une arrivée d'eau non représentée, destinée à compenser l'évaporation et les pertes.

Le lixiviateur est également alimenté en soude usée et en une boue riche en hydroxydes métalliques, toutes deux recyclées comme cela sera explicité dans ce qui suit.

Une fois homogénéisée dans le lixiviateur 2, la suspension ainsi formée voit la soude réagir avec les oxydes métalliques, de manière à solubiliser notamment le plomb, le cadmium et le zinc, qui sont tous solubles en milieu basique.

La solution ainsi formée est évacuée par une ligne 10 vers un séparateur solide/liquide, par exemple un filtre 12, qui permet la séparation d'une fraction riche en fer et d'une solution alcaline chargée en métaux et en sels dissous, circulant respectivement au sein des conduites 14 et 16.

Cette solution alcaline est admise dans un bac de cémentation 18 alimenté en zinc depuis une cuve électrolytique, comme cela sera explicité par la suite. De manière connue, une telle opération provoque, du fait de la présence du zinc, la transformation des métaux lourds comme le plomb à partir de leur forme soluble en leur forme métallique.

Cette forme métallique, ou cément, est extraite à partir d'un séparateur solide/liquide 20 par l'intermédiaire d'une conduite 22. La fraction liquide présente en aval de ce filtre 20 est une solution alcaline de zincate circulant dans la conduite 24, qui est ensuite admise dans une cuve électrolytique 26. En aval de celle-ci est isolée, après séchage et passivation dans une enceinte 28, une fine poudre de zinc stabilisée, évacuée par la conduite 30. Cette dernière se sépare en une conduite 30A permettant l'alimentation en zinc du bac de cémentation 18, et une conduite 30B qui mène à d'autres moyens de valorisation de cette poudre de zinc, non représentés.

Une solution de soude usée est délivrée, en aval de la cuve électrolytique, au sein d'une conduite 32. Cette soude usée est destinée à être recyclée en amont du lixiviateur 2, après avoir été soumise à une opération de traitement. Il est à noter que l'ensemble des étapes de procédé et des éléments de l'installation décrits ci-dessus sont classiques et correspondent à l'enseignement de FR-A-2 510 141.

Une vanne 34 est placée en aval de la conduite 32, et divise cette dernière en une première ligne 36 et une seconde ligne 38 au sein desquelles la soude usée est destinée à circuler. Il est à noter que cette vanne 34 permet, de manière connue de régler le débit relatif de soude circulant dans ces lignes 36 et 38. Une fraction de soude usée est directement recyclée en amont du lixiviateur 2, par la première ligne 36.

La deuxième ligne 38 est mise en communication avec un bac de neutralisation 40. Ce dernier est alimenté en eau par une conduite 42, destinée à la dilution de la soude usée. Le bac 40 reçoit également une arrivée 44 de rejets acides, destinée à provoquer la neutralisation de la soude usée.

Cette dernière contient des ions zinc, ainsi que des sels de sulfates et de chlorures sous forme dissoute. Les rejets acides présentent également une concentration importante en zinc dissous. La neutralisation entraîne donc, sous l'effet de la chute du pH, la formation d'une boue riche en hydroxydes de zinc.

Cette boue est ensuite séparée, au sein d'un filtre-presse 45, d'une grande partie des éléments dissous parasites, qui sont évacués par la conduite 46. L'efficacité de cette séparation est accentuée au moyen d'un lavage à l'eau, opéré par l'intermédiaire d'une conduite 48 débouchant dans le filtre-presse 45. L'eau de lavage souillée est également évacuée par la conduite 46.

La boue purifiée est alors admise, en aval du filtre-presse 45, au sein d'une conduite 50 et dirigée vers l'amont du lixiviateur 2. Le zinc présent dans cette boue pourra alors être extrait dans la cuve électrolytique 26.

On peut également envisager de placer la vanne 34 en amont de la cuve électrolytique 26, voire du bac de cémentation 18. De la sorte, la première fraction de l'agent de lixiviation usé est soumise à la cémentation et à l'électrolyse avant d'être recyclée directement en tête du procédé.

En revanche, la deuxième fraction de l'agent usé ne subit pas d'électrolyse, ni éventuellement pas de cémentation, et se trouve dirigée directement vers le bac de neutralisation 40.

On va maintenant décrire ci-dessous un exemple de mise en oeuvre du procédé conforme à l'invention.

Une tonne de poussières d'aciéries électriques, présentant des concentrations de l'ordre de 25% en poids de zinc, 5% en poids de plomb, 3% en poids de chlorures et 2% en poids de sulfates, dont une fraction lixiviable d'environ 162 kg de zinc, 45 kg de plomb, 30 kg de chlorures et 20 kg de sulfates, est introduite dans le lixiviateur 2. Ce dernier reçoit par ailleurs environ 1,9 tonne d'eau destinée à compenser l'évaporation et les pertes, 1,4 tonne de solution de soude neuve à environ 270 g/l, 14 tonnes d'agent de lixiation usé recyclé par la ligne 36, contenant approximativement 270 g de soude par litre, 215 kg de zinc, 185 kg de chlorures et 95 kg de sulfates. Le lixiviateur est également alimenté, via la conduite 50, par approximativement 1,3 tonne de boue à environ 50% d'humidité contenant de l'ordre de 275 kg de zinc, 10 kg de chlorures et 0,4 kg de sulfates.

On obtient, après filtration des insolubles, environ 17,3 tonnes de solution sodique qui contiennent approximativement 649 kg de zinc, 45 kg de plomb, 225 kg de chlorures et 115 kg de sulfates.

Après purification et électrolyse, on obtient d'une part environ 385 kg de poudre de zinc et, d'autre part, environ 16,75 tonnes de solution sodique usée, enrichie en éléments dissous parasites tels que des sels, et qui contient approximativement 257 kg de zinc, 221 kg de chlorures et 113 kg de sulfates.

Cette solution sodique usée est dirigée pour partie au sein de la première ligne 36 à raison de 14 tonnes et, pour une autre partie, au sein de la deuxième ligne 38 à raison de 2,75 tonnes.

Cette fraction circulant dans la deuxième ligne 38 est neutralisée par environ 1,6 tonnes de rejets acides de galvanisation contenant de l'ordre de 233 kg de zinc, 100 kg de fer et 423 kg de chlorures.

Dans le présent exemple, il n'est pas nécessaire de diluer la suspension de neutralisation qui reste facilement pompable et filtrable.

Après filtration et lavage par 1,2 tonne d'eau dans le filtre-presse 40 on évacue, par la conduite 46, environ 4,5 tonnes d'une solution riche en sels dissous contenant environ 450 kg de chlorures et 18 kg de sulfates.

On obtient environ 1,3 tonne de boue humide, à environ 50% d'eau, riche en hydroxydes métalliques et qui contient approximativement 275 kg de zinc ainsi que seulement 10 kg de chlorures et 0,4 kg de SO₄²⁻.

Cette boue peut être introduite dans le lixiviateur 2, via la conduite 50, tout comme la solution basique usée circulant dans la conduite 36, tel que cela a été décrit précédemment.

L'homme du métier comprendra aisément que le procédé peut indifféremment être continu ou discontinu avec les mêmes avantages.

Dans le présent exemple, le co-traitement de déchets selon l'invention permet de maîtriser la concentration en éléments dissous parasites, tels que les sels, dans la boucle sodique sans avoir recours à l'évaporation, ainsi que la valorisation d'environ 230 kg de zinc supplémentaires.

## Revendications

1. Procédé de traitement de déchets (8) contenant du zinc, tels que des poussières d'aciéries électriques, dans lequel on lixivie (2) lesdits déchets au moyen d'un agent de lixiviation basique, notamment de la soude, on purifie le lixiviat, notamment par cémentation (18), on extrait le zinc à partir du lixiviat purifié, notamment par électrolyse (26), et on recycle directement (36) en tête de l'étape de lixiviation, de l'agent de lixiviation usé obtenu après extraction du zinc et contenant des éléments dissous parasites, notamment des sels de chlorures et de sulfates,
**caractérisé en ce qu'**on recycle directement vers la tête de lixiviation (2) uniquement une première fraction de l'agent de lixiviation usé (36), on neutralise (40) une deuxième fraction dudit agent de lixiviation usé au moyen de rejets acides de manière à former une boue d'hydroxydes métalliques riche en zinc, on sépare (45) ladite boue desdits éléments dissous parasites, on recycle (50) ladite boue séparée vers la tête de l'étape de lixiviation et on règle les débits desdites première et deuxième fractions dudit agent de lixiviation usé, de façon à ce que l'agent de lixiviation admis en tête de l'étape de lixiviation présente une teneur en éléments dissous parasites inférieure à une valeur prédéterminée.

2. Procédé selon la revendication 1, **caractérisé en ce que** lesdits rejets acides contiennent du zinc, et proviennent notamment d'opérations de galvanisation.

3. Procédé selon l'une quelconque des revendications précédentes, **caractérisé en ce qu'**on dilue à l'eau ladite deuxième fraction dudit agent de lixiviation usé et/ou lesdits rejets acides avant l'étape de neutralisation ou au cours de cette étape.

4. Procédé selon l'une quelconque des revendications précédentes, **caractérisé en ce qu'**on lave (48) ladite boue après la phase de séparation des éléments dissous parasites, avant de la recycler en tête de l'étape de lixiviation.

5. Installation de traitement de déchets (8) contenant du zinc, tels que des poussières d'aciéries électriques, comprenant une arrivée desdits déchets (8) à traiter, un bac de lixiviation (2) qui est destiné à recevoir lesdits déchets et qui est mis en communication avec une alimentation (4) d'un agent de lixiviation basique, un bac de cémentation (18) pour purifier le lixiviat, une cuve électrolytique (26) pour l'extraction du zinc à partir du lixiviat purifié, et des moyens de recyclage direct (36) vers l'amont du bac de lixiviation (2), de l'agent de lixiviation usé obtenu après la dite extraction du zinc et contenant des éléments dissous parasites,
**caractérisée en ce que** lesdits moyens de recyclage comprennent une première ligne (36) directement reliée à l'amont du bac de lixiviation (2), au sein de laquelle est admise une première fraction de l'agent de lixiviation usé, ladite première ligne (36) étant disposée en parallèle d'une deuxième ligne de traitement (38) au sein de laquelle est admise une seconde fraction de l'agent de lixiviation usé, ladite deuxième ligne (38) étant mise en communication avec une arrivée (44) de rejets acides, ce qui permet la formation d'une boue d' hydroxydes métalliques riche en zinc, **en ce qu'**il est prévu des moyens de séparation (45) de ladite boue et desdits éléments dissous parasites, ainsi que des moyens de circulation (50) vers l'amont du bac de lixiviation de ladite boue séparée, ladite installation comportant en outre des moyens (34) aptes à régler le débit relatif desdites première et deuxième fractions d'agent de lixiviation circulant dans lesdites première (36) et deuxième (38) lignes.

6. Installation selon la revendication 5, **caractérisée en ce que** ladite arrivée (44) de rejets acides est alimentée en rejets acides contenant du zinc.

7. Installation selon l'une des revendications 5 ou 6, **caractérisée en ce qu'**elle comprend des moyens de lavage (48) de ladite boue, en aval des moyens de séparation (42) ou associés à ces derniers.

## Claims

1. A process for treating zinc-containing waste (8), such as dust from electric steel plants, in which said waste is leached (2) by means of a basic leaching agent, in particular sodium hydroxide, the leaching solution is purified, in particular by cementation (18), the zinc is extracted from the purified leaching solution, in particular by electrolysis (26), and spent leaching agent obtained after extraction of the zinc and containing dissolved parasitic elements, in particular chloride and sulphate salts, is recycled directly (36) to the start of the leaching stage,
**characterised in that** only a first fraction of the spent leaching agent (36) is recycled directly to the start of the leaching stage (2), a second fraction of said spent leaching agent is neutralised (40) by means of waste acids so as to form a zinc-rich sludge of metal hydroxides, said sludge is separated (45) from said dissolved parasitic elements, said separated sludge is recycled (50) to the start of the leaching stage and the flow rates of said first and second fractions of said spent leaching agent are adjusted such that the leaching agent admitted to the start of the leaching stage has a content of dissolved parasitic elements which is less than a predetermined value.

2. A process according to Claim 1, **characterised in that** said waste acids contain zinc, and originate in particular from zinc-coating operations.

3. A process according to any one of the preceding claims, **characterised in that** said second fraction of said spent leaching agent and/or said waste acids is/are diluted with water before the neutralisation stage or during this stage.

4. A process according to any one of the preceding claims, **characterised in that** said sludge is washed (48) after the phase of separation of the dissolved parasitic elements, before recycling it to the start of the leaching stage.

5. A processing installation for zinc-containing waste (8), such as dust from electric steel plants, comprising a feed means for said waste (8) to be treated, a leaching tank (2) for receiving said waste which is connected to a feed means (4) for a basic leaching agent, a cementation tank (18) for purifying the leaching solution, an electrolytic bath (26) for extracting the zinc from the purified leaching solution, and direct recycling means (36) to upstream of the leaching tank (2) for the spent leaching agent obtained after said extraction of the zinc and containing dissolved parasitic elements,
**characterised in that** said recycling means comprise a first line (36) directly connected to upstream of the leaching tank (2), into which is admitted a first fraction of the spent leaching agent, said first line (36) being arranged in parallel to a second processing line (38) into which is admitted a second fraction of the spent leaching agent, said second line (38) being connected to a feed means (44) for waste acids, which permits the formation of a sludge of zinc-rich metal hydroxides, **in that** means (45) for separating said sludge and said dissolved parasitic elements are provided, as are means (50) for circulating said separated sludge to upstream of the leaching tank, said installation furthermore comprising means (34) capable of adjusting the relative flow rates of said first and second fractions of leaching agent circulating in said first (36) and second (38) lines.

6. An installation according to Claim 5, **characterised in that** said inlet (44) for waste acids is supplied with zinc-containing waste acids.

7. An installation according to one of Claims 5 or 6, **characterised in that** it comprises means (48) for washing said sludge, downstream of the separation means (42) or associated with the latter.

## Patentansprüche

1. Verfahren zur Behandlung von Abfällen (8). die Zink enthalten, wie beispielsweise Staub von Elektrostahlwerken, bei dem die Abfälle mit Hilfe eines basischen Auslaugemittels, insbesondere Natriumkarbonat, ausgelaugt werden (2), die ausgelaugten Stoffe insbesondere durch Zementierung (18) gereinigt werden, das Zink aus den gereinigten ausgelaugten Stoffen insbesondere durch Elektrolyse (26) extrahiert wird und direkt (36) zu Beginn des Auslaugeschrittes ein gebrauchtes Auslaugemittel, das nach Extraktion des Zinks erhalten wurde und gelöste Nebenelemente, insbesondere Chlorid- und Sulfatsalze, enthält, rezykliert wird, **dadurch gekennzeichnet, dass** direkt zum Auslaugebeginn (2) hin nur eine erste Fraktion des gebrauchten Auslaugemittels (36) rezykliert wird, eine zweite Fraktion des gebrauchten Auslaugemittels mit Hilfe von sauren Ausschussprodukten neutralisiert wird (40), um einen Schlamm von Metallhydroxiden, der reich an Zink ist, zu bilden, der Schlamm (45) von den gelösten Nebenprodukten getrennt wird, der abgetrennte Schlamm zum Beginn des Auslaugeschrittes hin rezykliert wird (50) und die Durchflussmengen der ersten und der zweiten Fraktion des gebrauchten Auslaugemittels derart geregelt werden, dass das am Beginn des Auslaugeschrittes zugelassene Auslaugemittel einen Gehalt an gelösten Nebenelementen aufweist, der kleiner als ein vorbestimmter Wert ist.

2. Verfahren nach Anspruch 1, **dadurch gekennzeichnet, dass** die sauren Ausschussprodukte Zink enthalten und insbesondere von Galvanisierungsverfahren stammen.

3. Verfahren nach einem der vorhergehenden Ansprüche, **dadurch gekennzeichnet, dass** die zweite Fraktion des gebrauchten Auslaugemittels und/oder die sauren Ausschussprodukte vor dem Neutralisierungsschritt oder während dieses Schrittes mit Wasser verdünnt werden.

4. Verfahren nach einem der vorhergehenden Ansprüche, **dadurch gekennzeichnet, dass** der Schlamm nach der Trennungsphase der gelösten Nebenelemente gewaschen wird (48). bevor er am Beginn des Auslaugeschrittes rezykliert wird.

5. Anlage zur Behandlung von Abfällen (8), die Zink, wie beispielsweise Staub von Elektrostahlwerken, enthalten, umfassend eine Zuführung der zu behandelnden Abfälle (8), einen Auslaugebehälter (2), der dazu bestimmt ist, die Abfälle aufzunehmen, und der mit einer Versorgung (4) eines basischen Auslaugemittels in Verbindung gebracht wird, einen Zementierungsbehälter (18), um die ausgelaugten Stoffe zu reinigen, eine elektrolytische Wanne (26) zur Extraktion des Zinks aus den gereinigten ausgelaugten Stoffen und Mittel (36) zum direkten Rezyklieren stromaufwärts zum Auslaugebehälter (2), wobei das gebrauchte Auslaugemittel, das nach der Extraktion des Zinks erhalten wird, gelöste Nebenelemente umfasst,
**dadurch gekennzeichnet, dass** die Rezykliermittel eine erste Leitung (36) umfasst, die direkt mit dem stromaufwärtigen Bereich des Auslaugebehälters (2) verbunden ist, in die eine erste Fraktion des gebrauchten Auslaugemittels geleitet wird, wobei die erste Leitung (36) parallel zu einer zweiten Behandlungsleitung (38) angeordnet ist, in die eine zweite Fraktion des gebrauchten Auslaugemittels geleitet wird, wobei die zweite Leitung (38) mit einer Zuleitung (44) von sauren Ausschussmitteln in Verbindung gebracht wird, was die Bildung eines Schlamms von metallischen Hydroxiden, die reich an Zink sind, ermöglicht, dass Mittel (45) zur Trennung des Schlamms und der gelösten Nebenelemente sowie Zirkulationsmittel (50) für den abgetrennten Schlamm stromaufwärts zum Auslaugebehälter vorgesehen sind, wobei die Anlage ferner Mittel (34) umfasst, die die relative Durchflussmenge der ersten und der zweiten Fraktion von Auslaugemittel, das in der ersten (36) und zweiten Leitung (38) zirkuliert, regeln können.

6. Anlage nach Anspruch 5, **dadurch gekennzeichnet, dass** die Zuführung (44) von sauren Ausschussprodukten mit sauren Ausschussprodukten, die Zink enthalten, versorgt wird.

7. Anlage nach einem der Ansprüche 5 oder 6, **dadurch gekennzeichnet, dass** sie Mittel (48) zum Waschen des Schlamms stromabwärts zu den Trennungsmittel (42) oder mit diesen verbunden umfasst.
